# FASCICULE DE BREVET EUROPEEN

(11) **EP 0 584 003 B1**
(45) Date de publication et mention de la délivrance du brevet: **20.05.1998**
(21) Numéro de dépôt: 93402001.7
(22) Date de dépôt: 04.08.1993
(51) Int. Cl.: G02F 1/163

(54) **Alimentation d'une cellule electrochrome**
Stromversorgung einer elektrochromen Zelle
Power supply for an electrochromic cell

(30) Priorité: 12.08.1992 FR 9209931
(43) Date de publication de la demande: 23.02.1994
(73) Titulaire: SAINT-GOBAIN VITRAGE, 92400 Courbevoie (FR)
(72) Inventeur: Ripoche, Xavier, F-75018 Paris (FR)
(74) Mandataire: Menes, Catherine

(56) Documents cités:
- EP-A- 0 408 427
- US-A- 5 073 011
- PATENT ABSTRACTS OF JAPAN vol. 014, no. 207 (P-1043) & JP-A-02 046 428 (TOYOTA MOTOR) 15 Février 1990
- PATENT ABSTRACTS OF JAPAN vol. 012, no. 422 (P-783) & JP-A-63 157 132 (HITACHI MAXELL) 30 Juin 1988

## Description

La présente invention est relative à l'alimentation d'une cellule électrochrome notamment d'un vitrage à transmission lumineuse électrocommandée. Elle s'applique notamment à toutes les cellules électrochromes de grandes dimensions destinées par exemple au contrôle des apports solaires dans un bâtiment ou dans l'habitat d'un véhicule.

Une cellule électrochrome est constituée d'un empilement de couches comprenant un matériau électrochrome, c'est-à-dire un matériau susceptible d'insérer de façon réversible. des cations notamment des protons ou des cations de métaux alcalins et présentant des états de coloration différents entre l'état coloré et l'état décoloré, un électrolyte conducteur ionique, une contre-électrode qui sert de réservoir des cations et qui, comme le matériau électrochrome, doit être capable d'insérer et de désinsérer les cations, symétriquement par rapport à la couche de matériau électrochrome. Dans le cas d'un système fonctionnant en transmission, comme par exemple un vitrage, la contre-électrode se doit également de présenter un état décoloré quand la couche de matériau électrochrome est elle-même à l'état décoloré. Ces conditions font que l'on choisit généralement des couples de matériaux électrochromes cathodiques et anodiques, avec par exemple un matériau cathodique tel que l'oxyde de tungstène WO₃ qui se colore en bleu à l'état inséré en association avec un matériau anodique, tel que l'oxyde d'iridium IrO₂ ou l'oxyde de nickel NiO, décoloré à l'état inséré.

La couche de matériau électrochrome doit de plus être en contact avec une couche électroconductrice transparente. Il en est de même pour la contre-électrode, encore que cette fois, le caractère transparent ne soit nécessaire que dans le cas des systèmes fonctionnant en transmission. L'empilement est placé en sandwich entre deux substrats, celui côté matériau électrochrome devant être nécessairement transparent, tels que par exemple des plaques de verre.

Pour faire fonctionner le système, il faut imposer, entre tout couple de deux points en vis-à-vis de part et d'autre de l'électrolyte, une différence de potentiel au moins égale à la différence des potentiels thermodynamiques de la réaction d'insertion/désinsertion souhaitée. En pratique, compte tenu notamment des problèmes d'interface et de la résistance de l'électrolyte, la valeur minimum à imposer est toujours un peu supérieure à la différence des potentiels thermodynamiques. Plus la différence de potentiel appliquée est grande et plus la coloration ou la décoloration sera rapide. Néanmoins, la tension de fonctionnement ne doit pas être trop-importante car il importe de ne pas dépasser les tensions permettant des réactions parasites comme par exemple le dégagement d'hydrogène dans le cas d'un système protonique. Pour chaque changement d'état de coloration du système électrochrome, il est ainsi nécessaire de ne pas dépasser une certaine différence de potentiel appelée par la suite potentiel limite du système. Pour fixer les idées, dans le cas d'une cellule du type WO₃/électrolyte protonique/IrO₂, le potentiel limite est de +1,6 Volt en coloration et de -0,6 Volt en décoloration (les signes étant donnés par convention + pour la tension de coloration ; - pour la décoloration ; la tension limite doit donc être considérée en valeur absolue).

Les couches électroconductrices du système sont destinées au transfert des charges et la tension n'a à être appliquée qu'entre deux bornes diamétralement opposées du système électrochrome. Mais il va de soi que les couches électroconductrices présentent nécessairement une certaine résistance. Ainsi, dans le cas d'une couche transparente à base d'oxyde d'indium dopé à l'étain (ITO), une résistance carrée de l'ordre de 5 Ohms correspond aujourd'hui à un optimum de conductivité dans des conditions industrielles de production, d'où des chutes ohmiques du système d'autant plus importantes que ses dimensions sont grandes. De ce fait, la différence de potentiel effectivement imposée entre deux points en vis-à-vis est d'autant plus faible que ces points sont éloignés des bornes, avec alors pour ceux-ci un retard très important à la coloration, le maximum de coloration n'étant obtenu qu'après une durée de plusieurs minutes. Quand la taille du système devient grande (par exemple de l'ordre du mètre-carré), la commutation complète du système peut même s'avérer impossible à réaliser.

Pour s'affranchir de ces chutes ohmiques, les amenées de courant sont systématiquement formées non par des bornes ponctuelles mais par des bandes ou fils très conducteurs, par exemple en cuivre, qui s'étendent le long de deux côtés opposés de la cellule, de sorte que tous les points d'une couche équidistante à un de ces côtés sont équipotentiels. Néanmoins, ceci est loin d'être suffisant dès que la largeur du système électrochrome croît pour dépasser par exemple 10cm, limite à l'évidence incompatible avec la réalisation d'un vitrage bâtiment ou par exemple un toit ouvrant automobile.

Un système électrochrome est décrit dans le brevet US 5,073,011. Ce système est muni d'une paire d'embases entre lesquelles sont placés un élément électrochrome principal et un élément électrochrome de référence. L'électrode de référence est connectée electriquement à l'élément électrochrome principal de manière à maintenir les potentiels de changement de couleur de l'élément électrochrome principal à des niveaux de tension prédéterminés. Le système comprend également un régulateur de puissance qui commande l'élément électrochrome principal basé en partie sur l'extérieur de l'élément électrochrome de référence.

Dans la demande de brevet européen EP-A-408 427, il a été montré que la vitesse de commutation d'un système électrochrome est sensiblement améliorée si la différence de potentiel appliquée est modulée au cours de la période de commutation de telle sorte que la différence de potentiel entre un point donné de la couche de matériau électrochrome, choisi à proximité immédiate de la bande d'amenée de courant et son point en vis-à-vis de la contre-électrode, reste au cours de cette période de commutation, inférieure à la tension limite pour laquelle des réactions parasites se produisent. Ce procédé d'alimentation connu conduit à appliquer au début d'un cycle de commutation une tension bien plus grande et il en résulte une vitesse de coloration ou de décoloration très sensiblement améliorée, par exemple 6 fois plus grande pour une largeur de vitrage de 30 cm.

Toutefois, pour une largeur de par exemple 1 mètre, les temps de commutation sont encore de plusieurs minutes, du moins si on cherche à obtenir un contraste satisfaisant, par exemple de l'ordre de 4, le contraste étant défini comme le rapport de la transmission lumineuse à l'état décoloré sur la transmission lumineuse à l'état coloré. Par ailleurs, le procédé d'alimentation connu de EP-A-408 427 a tendance à accentuer fortement le contraste constaté en début de commutation entre les bords du vitrage et sa partie centrale. Des rapports de plus 1 pour 2 sont couramment obtenus, ce qui correspond à des différences très perceptibles pour l'oeil.

Un premier but de la présente invention est de proposer un nouveau procédé d'alimentation pour systèmes électrochromes permettant des temps de commutation plus courts, tout en garantissant l'intégrité du système et notamment l'absence de réactions parasites. Un autre but des inventeurs est la réduction du contraste entre la partie centrale d'un système électrochrome et ses bords, notamment en début de commutation, lorsque ce contraste est le plus marqué.

Ce problème est résolu selon l'invention en connectant en parallèle avec la cellule électrochrome un élément électrique de référence, équivalent à un élément de la cellule électrochrome de dimensions surfaciques nulles et d'épaisseur d'électrolyte nulle, monté en série avec une résistance Rᵢ, équivalente à la résistance ionique de l'électrolyte de la cellule électrochrome, ramenée à une surface nulle, la tension appliquée aux bornes de la cellule pour la coloration ou la décoloration étant telle que la tension aux bornes de cet élément de référence est maintenue à une valeur inférieure à une tension de référence ou de décoloration.

L'invention consiste ainsi à s'affranchir des chutes de tension dans les couches électroconductrices - dues à sa résistance Re de celles-ci - et dans l'électrolyte - due à la résistance ionique Ri - en montant en parallèle avec la cellule électrochrome un élément électrique qui serait équivalent à une cellule de résistances Re et Ri nulles, mais sans modification de l'impédance de transfert des charges aux interfaces électrolyte/matériau électrochrome et électrolyte/contre-électrode. Autrement dit, l'élément électrique équivalent est une cellule électrochrome où tous les éléments de l'empilement qui entourent les couches d'insertion et de désinsertion ont un comportement "parfait". A l'aide de cet élément de référence, il est possible de compenser les chutes ohmiques dans l'électrolyte et les couches électroconductrices, permettant ainsi des temps de commutation notablement réduits. Par ailleurs, les chutes ohmiques dans l'électrolyte étant compensées, il devient possible d'utiliser des électrolytes relativement mauvais - ou même très mauvais conducteurs ioniques - ce qui conduit à une plus grande homogénéité surfacique de la teinte pendant les phases de coloration/décoloration.

Une première variante de l'invention consiste en un dispositif électrochrome comprenant une cellule électrochrome formée par l'empilement sur un substrat transparent d'un système constitué par une couche électroconductrice, une couche de matériau électrochrome, un électrolyte, une contre-électrode, une couche électroconductrice, ladite cellule étant munie de deux bornes W et CE connectées aux couches électroconductrices et d'un générateur de tension permettant d'appliquer une différence de potentiel entre lesdites bornes pour obtenir la coloration ou respectivement la décoloration de la cellule. Cette cellule est connectée en parallèle à un élément électrique de référence monté en série avec une résistance Rᵢ, ladite différence de potentiel appliquée aux bornes W et CE de ladite cellule étant telle que la tension aux bornes W et R_{EF} de l'élément de référence est maintenue à une valeur inférieure à une tension de référence U_{REF} de coloration ou respectivement de décoloration, ledit élément électrique de référence étant constitué par une seconde cellule électrochrome pour laquelle les chutes ohmiques sont petites par rapport à celles dues aux couches électroconductrices et à la résistance ionique de l'électrolyte de la cellule électrochrome principale.

Une deuxième variante de l'invention consiste en un dispositif électrochrome comprenant une cellule électrochrome formée par l'empilement sur un substrat transparent d'un système constitué par une couche électroconductrice transparente, une couche de matériau électrochrome, un électrolyte, une contre-électrode, une couche électroconductrice, ladite cellule étant munie de deux bornes W et CE connectées aux couches électroconductrices et d'un générateur de tension permettant d'appliquer une différence de potentiel entre lesdites bornes pour obtenir la coloration ou respectivement la décoloration de la cellule. Cette cellule est connectée en parallèle à un élément de référence monté en série avec une résistance Rᵢ équivalent à la résistance ionique d'une unité de surface de ladite cellule électrochrome, ladite différence de potentiel appliquée entre les bornes W et CE de ladite cellule étant telle que la tension aux bornes W et R_{EF} de l'élément de référence est maintenue à une valeur inférieure à une tension de référence U_{REF} de coloration ou respectivement de décoloration, ledit élément électrique de référence étant constitué par un montage électrique dont l'impédance complexe Z équivaut à l'impédance complexe d'une unité de surface de la cellule électrochrome.

Dans une première variante de réalisation de l'invention, l'élément électrique équivalent est constitué par une toute petite cellule électrochrome, de référence par exemple de l'ordre de 1 cm², avec un électrolyte de résistance négligeable devant la résistance ionique de l'électrolyte de la cellule électrochrome principale. Il peut ainsi être utilisé une épaisseur d'électrolyte très réduite et/ou pour la cellule à alimenter un électrolyte de même nature mais moins bon conducteur ionique. Dans le cas d'un électrolyte du type polymère conducteur ionique, on pourra par exemple augmenter, pour la cellule de référence, la quantité de porteurs de charges, sans modifier la matrice de base pour garder les mêmes conditions aux interfaces. Dans le cas d'un électrolyte en couche mince du type diélectrique, on utilisera une couche également plus mince et à plus grande porosité. A noter que cette cellule de référence étant nécessairement très petite pour s'affranchir des chutes ohmiques dues à la résistance des couches électroconductrices, il est possible de se placer dans des conditions très limites qui seraient incompatibles avec un dépôt sur une large surface comme celle d'un vitrage mais qui permettent d'obtenir une résistance ionique dans l'électrolyte très faible. Il est aussi possible de compenser la résistance ionique Rᵢ de la cellule en tenant compte de la résistance ionique rᵢ de la cellule de référence, en montant la cellule de référence en série avec une résistance R'ᵢ telle que R'ᵢ+rᵢ= Rᵢ ; Rᵢ étant cette fois la résistance de l'électrolyte pour une cellule électrochrome de 1 cm², c'est-à-dire de mêmes dimensions que la cellule de référence. Si rᵢ est petit devant Rᵢ, la compensation de la chute ohmique dans l'électrolyte sera pratiquement totale. Avantageusement encore, la cellule de référence est maintenue systématiquement à une température relativement élevée, par exemple de l'ordre de 60°C, car la résistance ionique décroit avec la température ce qui permet ainsi d'assurer un rᵢ petit. Pour le reste, si on choisit exactement les mêmes matériaux que pour la cellule principale, on obtient un élément qui présente exactement les mêmes impédances de transfert de charges et de diffusion des ions. Par ailleurs, si la cellule électrochrome de référence est placée dans les mêmes conditions de température que la cellule principale, les variations éventuelles de ces impédances, en fonction de la température, seront automatiquement compensées.

En pratique, il peut être toutefois préférable d'utiliser un élément de référence "tout électrique", modèle de la cellule de référence qui pourra être aisément incorporé dans le circuit électrique d'alimentation de la cellule. Un tel élément de référence "tout électrique" est constitué par un montage électrique - dont l'impédance serait équivalente, pour toute fréquence, à l'impédance d'une unité de surface de la cellule électrochrome - monté en série avec une résistance Rᵢ correspondant à la résistance ionique d'une cellule électrochrome d'une unité de surface.

Dans ce qui suit, l'unité de surface sera toujours systématiquement choisie égale à 1 cm². Mais il va de soi que toute autre dimension peut être choisie, à la condition toutefois que l'unité de surface reste petite devant les dimensions de la cellule électrochrome à alimenter.

Dans la mesure où les cellules électrochromes considérées dans le cadre de l'invention sont grandes et font appel à des temps de coloration/décoloration supérieurs à la dizaine de secondes, ce montage électrique peut être réduit à une résistance R associée en série avec une capacité C. Comme il sera montré plus tard, dans une première approximation, C peut être assimilée au rapport de la quantité de charges insérées dans le matériau électrochrome sur le potentiel à l'équilibre de la cellule, c'est-à-dire du potentiel mesuré après un temps d'homogénéisation suffisant pour permettre une répartition des ions uniforme dans l'épaisseur du matériau électrochrome. La résistance R correspond pour sa part à la somme de la résistance Rₜ de transfert de charges aux interfaces avec l'électrolyte et d'une résistance R_{d} due à la diffusion des ions dans la cellule.

Il importe de noter que les valeurs de Rₜ, R_{d}, Rᵢ et C dépendent uniquement de la nature et de l'épaisseur des différentes couches du matériau. Il en est de même pour Rₑ, la résistance carrée des couches électroconductrices. Autrement dit, l'élément de référence et la résistance Rᵢ qui lui est associée sont parfaitement indépendants de la taille du système, ce qui permet d'utiliser une alimentation unique (à la condition toutefois que celle-ci soit capable de délivrer la puissance nécessaire qui pour sa part, croît avec la taille de la cellule électrochrome).

Il peut être montré que l'uniformité de la couleur au tout début de la coloration ou de la décoloration dépend du rapport (Rₜ+R_{d}+Rᵢ)/Rₑ. Si on définit l'homogénéité à partir du rapport des tensions initiales effectives à l'instant zéro au centre et sur les bords de la cellule par des amenées de courant, on a constaté qu'une homogénéité de plus de 70 % est obtenue lorsque ce rapport est supérieur à 1000. L'homogénéité de coloration est de l'ordre de 95 % pour un rapport de 10 000. Les résistances de transfert et de diffusion étant limitantes de la vitesse de coloration dans le procédé selon l'invention, il importe toutefois de ne pas augmenter le terme Rₜ+R_{d}. Par contre, il est avantageux d'utiliser des couches électroconductrices de très faible résistivité. Par ailleurs, l'électrolyte est de préférence choisi avec une résistance ionique grande, de préférence au moins égale à 500 fois la résistance carrée des couches électroconductrices, sans excéder de préférence 100 000 fois cette valeur, car alors la puissance qui doit être fournie au vitrage devient très grande.

Pour augmenter la résistance ionique de l'électrolyte il est possible comme indiqué précédemment de moduler son épaisseur et/ou sa quantité de porteurs de charges (dans le cas d'un électrolyte polymère conducteur ionique), ou sa porosité (dans le cas d'un diélectrique). Il est aussi possible de placer l'électrolyte entre deux couches barrières très résistantes comme par exemple des couches de diélectriques du type Ta₂O₅ à très faibles porosités, la résistance ionique de l'ensemble constitué par l'électrolyte et les deux couches barrières étant de préférence compris entre 10 000 et 100 000 Ohms. Des valeurs plus grandes imposent des tensions d'alimentation trop importantes. Par ailleurs, même si la résistance ionique peut avantageusement être élevée, l'électrolyte doit bien sûr conserver une certaine conductivité pour permettre la réalisation des équilibres thermodynamiques. De préférence encore, la conductivité ionique de l'électrolyte dans cet empilement avec couches barrières est choisie supérieure à 10⁻³ Ohms⁻¹.

Pour tenir compte de la diminution de la résistance ionique de l'électrolyte quand la température croît, il est préférable d'utiliser pour les résistances Rᵢ des thermistances ou des montages électroniques équivalents dont la résistance varie avec la température comme la résistance de l'électrolyte. Des thermistances peuvent être également utilisées pour les résistances Rₜ et R_{d} mais le facteur température est moins critique et de plus Rₜ + R_{d} est petit devant Rᵢ, l'emploi de thermistances est donc moins justifié. Dans le domaine de températures d'utilisation des cellules électrochromes, la capacité C ne semble pas dépendre de la température.

Nous avons dit plus haut que le modèle simplifié d'impédance est valable pour des temps de commutation relativement longs. En pratique, il conduit à minimiser la différence de potentiel appliquée à la cellule en tout début de commutation, autrement dit à plafonner le courant et donc la vitesse initiale de coloration ou de décoloration. Pour y remédier, il peut être utilisé comme indiqué précédemment un montage électrique reproduisant pour chaque fréquence, l'impédance de la cellule ou un montage semi-simplifié comportant outre la résistance R et la capacité C, une capacité C' montée en parallèle avec la capacité C.

D'autres détails et caractéristiques avantageuses de l'invention ressortent de la description détaillée faite ci-après en référence aux dessins annexés qui représentent :
* **figure 1** : un schéma de principe d'une cellule électrochrome selon la demande de brevet européen EP-A-408 427,
* **figure 2** : une modélisation de la cellule électrochrome de la figure 1 représentée par un réseau à 7 mailles,
* **figure 3** : un schéma d'un circuit électrique équivalent à une interface de type électrolyte / matériau électrochrome,
* figure 4 : une courbe représentant la quantité de charge insérée (en milli-Coulombs par centimètre carré) en fonction du potentiel à l'abandon de la cellule,
* figure 5 : un modèle d'un circuit électrique équivalent à la cellule électrochrome de la figure 1,
* **figure 6** : la courbe représentant la différence de potentiel appliquée au cours du temps pour une cellule réelle conforme à la figure 1 ou selon le modèle de la figure 5,
* **figure 7** : une courbe représentant le facteur d'homogénéité du vitrage en fonction de la valeur du rapport (R_{d}+Rₜ+Rᵢ)/Rₑ,
* **figure 8** : un modèle d'une cellule avec un élément de référence selon l'invention.

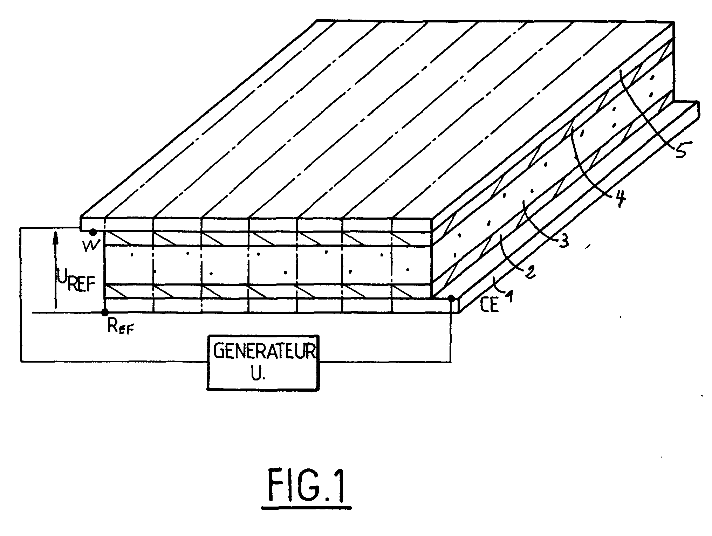

Pour simplifier, nous nous limiterons pour la suite de ce mémoire à des cellules électrochromes constituées de l'empilement de couches suivantes représenté à la figure 1 :
* une couche électroconductrice 1 à base d'oxyde d'indium (ITO) déposée par exemple par pulvérisation cathodique magnétron,
* un matériau électrochrome cathodique 2 (WO₃),
* un électrolyte conducteur protonique 3,
* une contre-électrode 4, matériau électrochrome anodique IrO₂ protonée avant l'assemblage,
* une couche électroconductrice 5 identique à (1).

Les équilibres thermodynamiques qui interviennent dans les réactions de coloration/décoloration peuvent s'écrire :

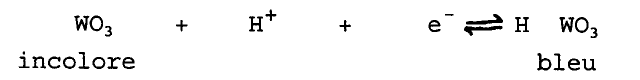

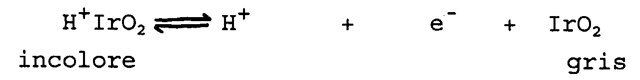

Pour éviter des réactions parasités, notamment à la formation d'hydrogène, à 20°C, les différences de potentiels limites sont de 1,6 Volt en coloration et -0,6 Volt en décoloration. Mais il doit être noté que ces tensions limites correspondent aux différences de potentiels locales entre un point situé côté WO₃ et son vis-à-vis côté IrO₂. La différence de potentiel appliquée à la cellule peut en fait être bien plus élevée tant que pour tout couple de points en vis-à-vis, la tension limite n'est pas dépassée.

Dans ce qui suit, nous nous limiterons au cas de la coloration, mais il va de soi que ce qui sera dit s'applique également pour les phases de décoloration, en utilisant les tensions limites adéquates.

Dans le cas de l'alimentation proposée par la demande de brevet EP-A-408 427, la différence de potentiel appliquée par le générateur entre les bandes métalliques ou métallisées (bornes W et CE) est telle que la différence de potentiel U_{REF}, entre la borne W et la borne R en vis-à-vis de la couche IrO₂, soit maintenue inférieure à la tension limite de 1,6 Volt pendant toute la durée d'une coloration. Ceci revient à appliquer en début de coloration, une différence de potentiel relativement élevée qui va décroître selon une courbe exponentielle au cours de la coloration. Le gain de temps est très grand par rapport à une alimentation à tension constante, néanmoins, des temps de coloration supérieurs à 2 minutes (pour un contraste de 4) sont encore nécessaires, avec des couches électroconductrices d'une résistance carrée de 5 Ohms.

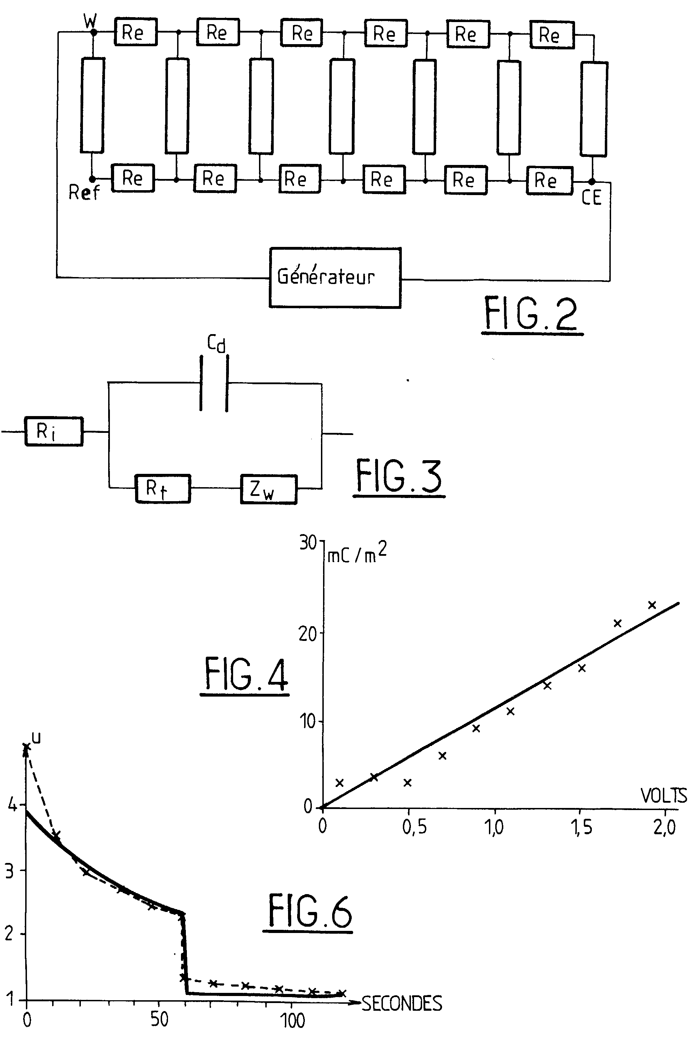

Pour une meilleure compréhension des phénomènes limitant les cinétiques de réaction, il a été procédé à une modélisation électrique de la cellule. Pour celà, la cellule électrochrome est maillée en N bandes parallèles aux bandes latérales d'amenée de courant. Sur la figure 1, on a représenté ainsi 7 bandes. Si ces bandes sont assez nombreuses, et donc correspondent chacune à un très faible écartement par rapport à la distance entre les bandes d'amenée de courant, on peut considérer que dans chacune de ces bandes, la chute de potentiel due à l'ITO est négligeable, de sorte que la cellule électrochrome peut être représentée par le réseau électrique de la figure 2, c'est-à-dire par un ensemble de 7 petits éléments de cellules connectées deux à deux par deux résistances Rₑ. Dans la pratique, une bonne corrélation avec les valeurs réelles mesurées par des cellules d'au plus 1 m de large est constatée pour un maillage avec N = 41.

Chacun de ces éléments peut, du point de vue électrique, être représenté par son circuit électrique dit de Randles représenté à la figure 3 et décrit dans l'article de C. Ho, I.D. RAISTRICK et R.A. HUGGINS paru dans le "Journal of Electrochemical Society - n°127 - page 343 - (1980). Dans ce circuit, Rᵢ représente la résistance ionique de l'électrolyte, Rₜ la résistance de transfert de charge aux interfaces WO₃/électrolyte et électrolyte/IrO₂, C_{d} la capacité de double couche à ces interfaces et Z_{w} l'impédance de Warburg de la cellule prenant en compte la diffusion des espèces ioniques dans WO₃ et IrO₂.

L'impédance Z de ce modèle électrique peut être simplifiée dans deux cas limites. Au temps = O, si on applique une tension Vₒ, l'intensité du courant mesuré tend vers Vₒ/Rᵢ, la mesure du courant Iₒ permet donc d'accéder à la valeur de Rᵢ.

Par ailleurs, à basse fréquence (f < 0,1 Hz), la capacité de double couche C_{d} devient négligeable et l'impédance de diffusion se réduit à une résistance de diffusion en série avec une capacité C. L'impédance Z peut alors s'écrire Z = Rᵢ + Rₜ + R_{d} - j/Cω , où ω = 2 π f.

La capacité C de la cellule électrochrome peut être calculée à partir de la courbe de la figure 4 où est représentée en ordonnées la quantité de charges insérées dans WO₃ et en abscisse le potentiel à l'abandon de la cellule, c'est-à-dire le potentiel d'équilibre de la cellule mesuré lorsque l'alimentation électrique est coupée, après un temps d'homogénéisation de quelques minutes, suffisant pour s'affranchir des problèmes de diffusion des ions. Comme on peut le voir sur cette figure 4, le potentiel d'équilibre croît de manière approximativement linéaire avec la quantité de charges insérées dans une relation de type Q = CV, ce qui dans le cas de l'empilement considéré, permet de trouver une valeur de capacité égale à 9,9 mF/cm².

Les valeurs précises de R_{d} et de Rₜ dépendent de l'état de coloration de la cellule. Connaissant par ailleurs la valeur de résistance Rₑ, on peut ajuster la valeur de R = R_{d} + Rₜ+ Rᵢ de façon à ce que l'impédance Z = R - j/Cω corresponde à la valeur expérimentale. On a donc établi pour différentes valeurs de R la courbe illustrée à la figure 6 donnant la tension de coloration en fonction du temps d'une part pour une cellule expérimentale (courbe en pointillés) et d'autre part pour différentes valeurs de R, dans le modèle électrique représenté à la figure 5 (mais en choisissant un paramètre de mailles N = 41), jusqu'à obtenir par approximation successive une valeur satisfaisante pour R. La courbe en traits pleins de la figure 5 a ainsi été obtenue en choisissant R = 3400 Ohms, ce qui nous permet d'approximer pour Rₜ + R_{d} la valeur de 2400 Ohms sachant que la résistance ionique calculée à partir de la mesure de l'intensité Iₒ et de la tension appliquée Vₒ est de l'ordre de 1000 Ohms.

Il est ainsi possible de réaliser une bonne modélisation du système aux temps longs en connaissant avec une bonne approximation les valeurs de Rᵢ, Rₜ + R_{d}, Rₑ et C. Comme on peut le voir également sur la figure 6, ce modèle simple n'est pas valable pour les 10 premières secondes de coloration, (il a été approximé pour des basses fréquences). Pour celles-ci, il faut complexifier le modèle par exemple en ajoutant une capacité C', montée en parallèle. Après 10 secondes toutefois, la cellule électrochrome peut bien être modélisée par un schéma tel que celui de la figure 5, l'intensité entre la borne W et la borne de référence étant maintenue par exemple inférieure ou égale à la tension limite de coloration au moyen d'un amplificateur différentiel ayant un gain très important par exemple de l'ordre de G = 10⁻⁶.

Si l'électrode de référence est placée non entre Rₑ et Rᵢ comme dans le cas du montage décrit par la demande de brevet européen EP-A-408 427 mais comme indiqué par la ligne pointillée en E, donc entre (Rₜ + R_{d}) et Rᵢ, la chute de tension dans l'électrolyte va pouvoir être compensée. De cette façon, la tension d'alimentation appliquée au système entre les bornes W et CE pour maintenir une tension de référence de 1,6 Volt va devoir être augmentée, avec pour conséquence des temps de coloration plus courts. Plus la résistance ionique de l'électrolyte est grande, plus le gain en temps de coloration sera grand. Néanmoins, il faut tenir compte également des tensions d'alimentation admissibles pour l'application de la cellule électrochrome (dans une automobile il est par exemple préférable de se limiter à une tension d'alimentation maximum de 12 Volts, par contre pour un vitrage bâtiment une limite de 110 ou 220 Volts peut être choisie). De plus, l'augmentation de la résistance ionique Rᵢ implique une augmentation de la puissance dissipée et des pertes par effet Joule. Dans la pratique, un compromis doit donc être fait entre le temps de coloration souhaité et les caractéristiques de l'alimentation électrique.

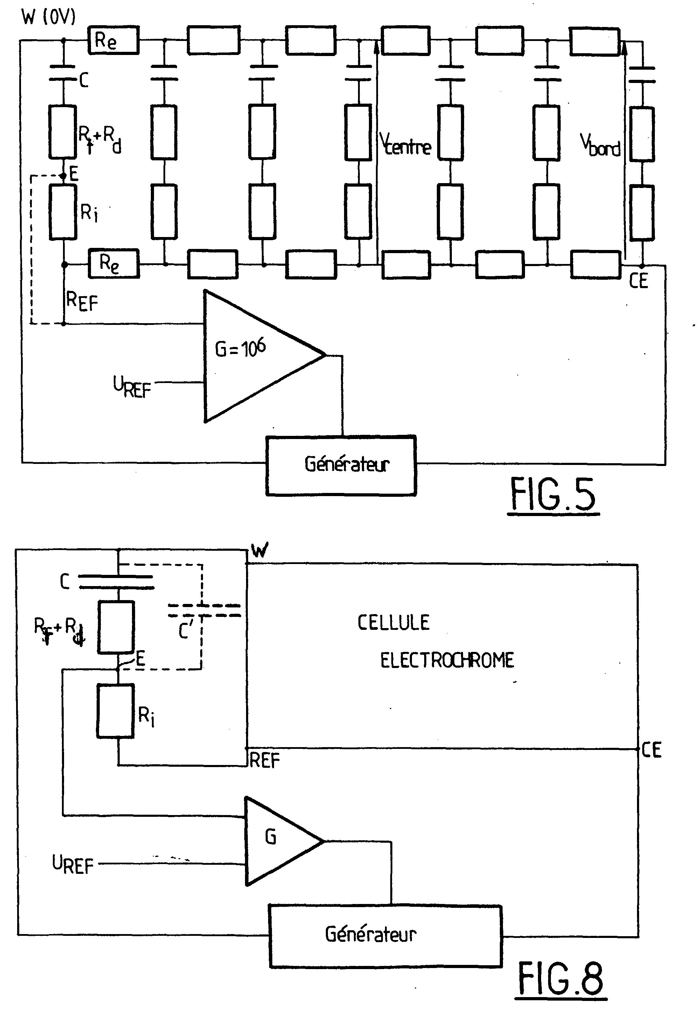

En pratique, il va de soi que l'électrode de référence ne peut être placée entre (Rₜ + R_{d}) et Rᵢ comme dans le cas de la figure 5. Toutefois, il est possible d'adjoindre une "maille" supplémentaire au réseau sous la forme d'une petite cellule électrochrome ou d'un élément électrique de référence qui, comme indiqué dans le montage schématisé à la figure 8, est connecté en parallèle avec la cellule. A noter que dans le cas où l'élément de référence est constitué par une cellule électrochrome de petites dimensions, il doit être tenu compte de la résistance ionique rᵢ de la cellule de référence, et on utilise alors une résistance R'ᵢ telle que R'ᵢ = Rᵢ - rᵢ.

L'élément de référence, aux bornes duquel est contrôlée la tension de référence est ainsi simplement constitué par une capacité C et une résistance (Rₜ + R_{d}), les valeurs des composants C, (Rₜ + R_{d}) et Rᵢ étant déterminées pour chaque type d'empilement électrochrome par le programme de modélisation et les courbes de tension et de courant caractéristiques de la cellule électrochrome. Pour accélérer la cinétique de coloration aux temps courts, il est avantageux d'ajouter une capacité C', en parallèle avec C et (Rₜ + R_{d}) qui permet de tenir compte de la variation d'impédance en début de coloration. La tension de référence peut être choisie avantageusement égale à la tension limite de coloration/décoloration et de préférence, sauf en fin de coloration ou de décoloration où elle est augmentée.

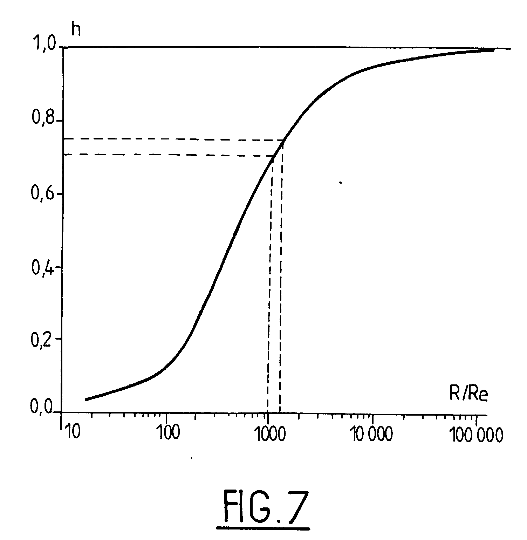

Par ailleurs, le modèle électrique de référence a permis de calculer le facteur h d'homogénéité de coloration (h étant défini comme le rapport de la tension au centre de la cellule sur la tension aux bords près des amenées de courant) en fonction de la valeur du rapport R/Rₑ où R = Rₜ + R_{d} + Rᵢ. La courbe représentative de h est donnée à la figure 7, une échelle logarithmique étant utilisée pour la rapport R/Rₑ.

Très clairement, il est avantageux de réduire Rₑ mais nous avons déjà indiqué que cette réduction se heurtait très vite à des difficultés techniques et physiques qui interdisent des couches à la fois très électroconductrices et très transparentes. De fait, il est difficile de faire varier le rapport R/Rₑ de plus d'un facteur 3 en jouant sur la valeur de Rₑ. Par contre, la résistance ionique de l'électrolyte peut être augmentée par exemple en diminuant le nombre de porteurs de charge dans le polymère, en jouant sur l'épaisseur de l'électrolyte ou encore en utilisant des couches barrières très résistantes (mais encore conductrices ioniques) par exemple à base d'oxyde de tantale. Une autre possibilité est d'ajouter à l'interface couche électroconductrice/couche de matériau électrochrome et/ou à l'interface couche électroconductrice/contre-électrode une couche additionnelle transparente, qui présente une conductivité électronique Ce faible mais non nulle et une conductivité ionique Ci aussi faible que possible (rapport Ci/Ce très grand).

La comparaison entre l'invention et un montage selon l'art, avec pourtant une compensation de la résistance Rₑ des couches électroconductrices, a été faites pour deux types de vitrages, un toit électrochrome dont la surface de coloration a pour dimension 40 cm X 74 cm et un vitrage bâtiment de dimensions utiles 100 cm x 200 cm, les simulations ayant été effectuées en prenant les valeurs respectives suivantes : Rₜ+ R_{d} = 2400 Ohms et C = 10 mF/cm² déterminées expérimentalement.

Comme les tableaux annexés le montrent, le procédé selon l'invention permet d'obtenir une uniformité très grande de la coloration et un gain en temps de coloration particulièrement remarquable dans le cas d'un vitrage bâtiment.

Avec une simple modification du circuit d'alimentation, la compensation de la résistance ionique de l'électrolyte ne permet toutefois que des gains assez petits. Par contre, si on augmente la valeur de Rᵢ, les gains deviennent très appréciables, des gains de commutation de 25 secondes (ou 40 secondes) étant obtenus dans le cas du vitrage bâtiment, pour un contraste de 3 (ou respectivement de 4), avec une homogénéité de plus de 95 %. Sans compensation de la résistance ionique, on note que l'augmentation de la résistance ionique permet de même une uniformité de coloration bien plus grande, mais au prix d'une augmentation très importante des temps de coloration qui, pour un toit ouvrant, dépassent déjà les deux minutes pour un contraste de seulement 2.

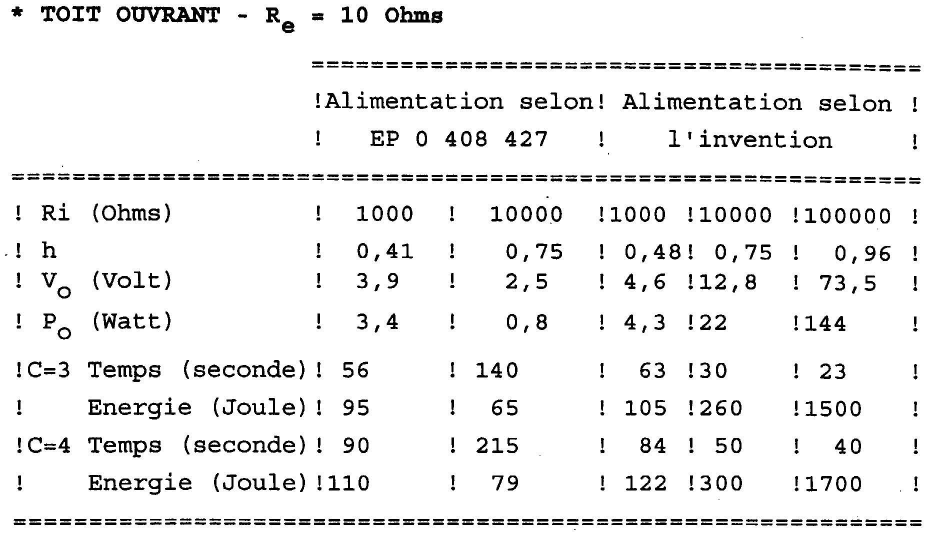

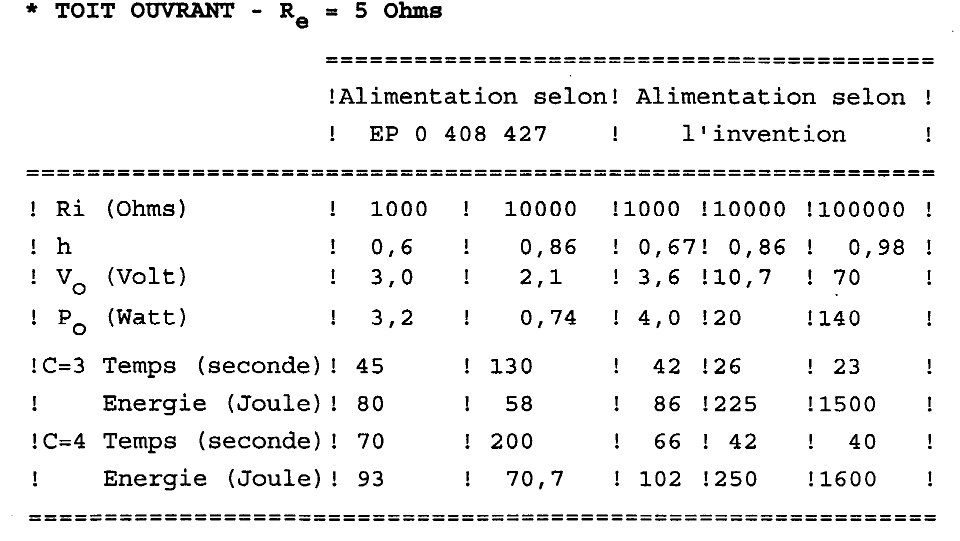

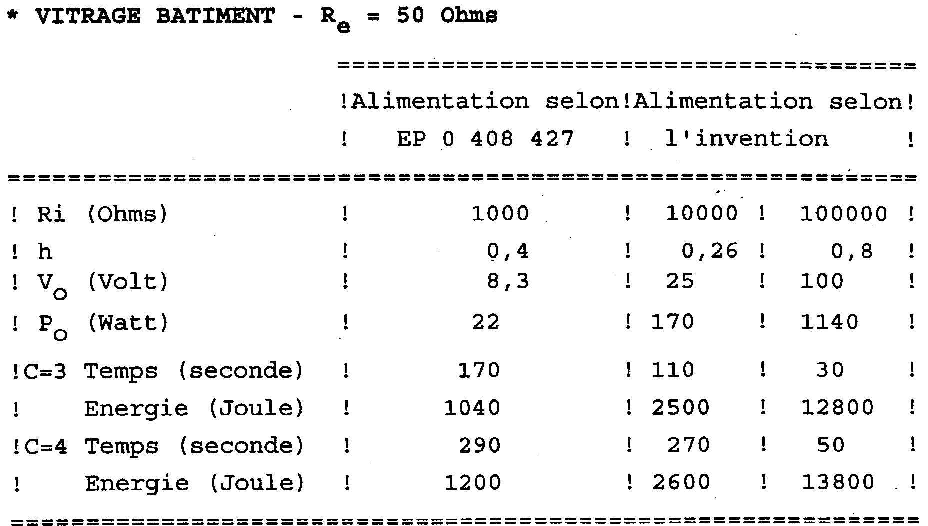

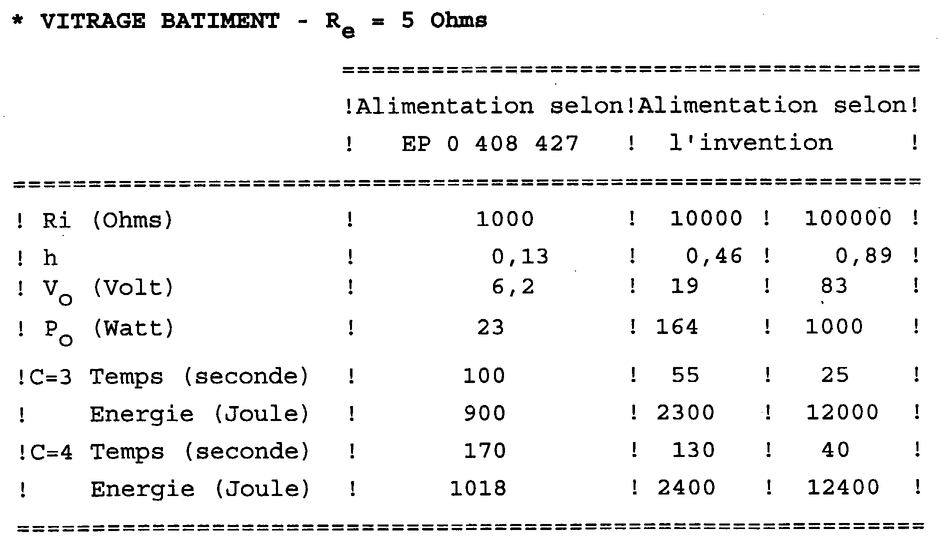

## Revendications

1. Dispositif électrochrome comprenant une cellule électrochrome principale formée par l'empilement sur un substrat transparent d'un système constitué par une couche électroconductrice (1), une couche de matériau électrochrome (2), un électrolyte (3), une contre-électrode (4), une couche électroconductrice (5), ladite cellule étant munie de deux bornes W et CE connectées aux couches électroconductrices et d'un générateur de tension permettant d'appliquer une différence de potentiel entre lesdites bornes pour obtenir la coloration ou respectivement la décoloration de la cellule, **caractérisé en ce qu**'il comprend un élément électrique de référence constitué par une seconde cellule électrochrome pour laquelle les chutes ohmiques sont petites par rapport à celles dues aux couches électroconductrices (1, 5) et à la résistance ionique de l'électrolyte (3) de la cellule électrochrome principale, cet élément étant connecté en parallèle à la cellule électrochrome principale et monté en série avec une résistance Rᵢ, ladite différence de potentiel appliquée aux bornes W et CE de ladite cellule étant telle que la tension aux bornes W et R_{EF} de l'élément de référence est maintenue à une valeur inférieure à une tension de référence U_{REF} de coloration ou respectivement de décoloration.

2. Dispositif électrochrome selon la revendication 1, **caractérisée en ce que** ladite cellule électrochrome de référence comporte un électrolyte dont la résistance Rₜ de transfert des ions à ses interfaces est identique à celle de l'électrolyte (3) de la cellule électrochrome principale et dont la résistance ionique est petite par rapport à la résistance ionique de l'électrolyte (3) de la cellule électrochrome principale, mesurée pour une cellule de mêmes dimensions que celles de la cellule électrochrome de référence.

3. Dispositif électrochrome selon l'une des revendications 1 à 2, **caractérisée en ce que** la cellule électrochrome de référence est soumise à la même température que le reste de la cellule.

4. Dispositif électrochrome selon l'une des revendications 1 à 3, **caractérisée en ce que** la cellule électrochrome de référence est maintenue à une température élevée, par exemple à une température de l'ordre de 60°C.

5. Dispositif électrochrome comprenant une cellule electrochrome formée par l'empilement sur un substrat transparent d'un système constitué par une couche électroconductrice transparente (1), une couche de matériau électrochrome (2), un électrolyte (3), une contre-électrode (4), une couche électroconductrice (5), ladite cellule étant munie de deux bornes W et CE connectées aux couches électroconductrices et d'un générateur de tension permettant d'appliquer une différence de potentiel entre lesdites bornes pour obtenir la coloration ou respectivement la décoloration de la cellule, **caractérisé en ce qu**'il comprend un élément électrique de référence constitué par un montage électrique dont l'impédance complexe Z équivaut à l'impédance complexe d'une unité de surface de la cellule électrochrome, cet élément étant connecté en parallèle à la cellule électrochrome et monté en série avec une résistance Rᵢ équivalent à la résistance ionique d'une unité de surface de ladite cellule électrochrome, ladite différence de potentiel appliquée entre les bornes W et CE de ladite cellule étant telle que la tension aux bornes W et R_{EF} de l'élément de référence est maintenue à une valeur inférieure à une tension de référence U_{REF} de coloration ou respectivement de décoloration.

6. Dispositif électrochrome selon la revendication 5, **caractérisée en ce qu**'il est substitué à l'impédance complexe Z une résistance R et une capacité C, C étant égale au rapport de la quantité de charges insérées dans le matériau électrochrome sur le potentiel à l'équilibre de la cellule.

7. Dispositif électrochrome selon la revendication 6, **caractérisée en ce que** les couches électroconductrices présentent une résistance carrée Rₑ telle que le rapport R/Rₑ soit supérieur à 1000 et de préférence supérieur à 10 000, pour une cellule d'une unité de surface.

8. Dispositif électrochrome selon la revendication 7, **caractérisée en ce que** la résistance Rᵢ et la résistance Rₑ sont choisies telles que le rapport Rᵢ/Rₑ soit supérieur à 500 pour une cellule d'une unité de surface.

9. Dispositif électrochrome selon la revendication 8, **caractérisée en ce que** le rapport Rᵢ/Rₑ est inférieur à 100 000.

10. Dispositif électrochrome selon l'une des revendications 7 à 9, **caractérisée en ce que** l'électrolyte (3) est placé entre deux couches barrières à forte résistivité telles que la résistance ionique de l'ensemble constitué par l'électrolyte (3) et les deux couches barrières soit supérieur à 10 000 Ohms et de préférence inférieur à 100 000 Ohms.

11. Dispositif électrochrome selon la revendication 10, **caractérisée en ce que** l'électrolyte (3)présente une conductivité ionique supérieure à 10⁻³ Ohms⁻¹.

12. Dispositif électrochrome selon l'une des revendications précédentes, **caractérisée en ce que** la résistance Rᵢ est une thermistance dont la résistance varie en fonction de la température comme la résistance ionique de l'électrolyte.

13. Dispositif électrochrome selon l'une des revendications précédentes, **caractérisée en ce qu'**une capacité C' est montée en parallèle avec l'élément de référence.

14. Dispositif électrochrome selon l'une des revendications précédentes, **caractérisée en ce que** la tension de référence U_{REF} est choisie identique à la tension limite de coloration/décoloration.

15. Dispositif électrochrome selon l'une des revendications précédentes, **caractérisée en ce que** la tension de référence U_{REF} est choisie égale à la tension limite de coloration/décoloration sauf en fin de coloration ou de décoloration où la tension de référence est augmentée.

16. Dispositif électrochrome selon l'une des revendications 5 à 15, **caractérisée en ce qu'**elle comprend à l'interface matériau électrochrome (2)/couche électroconductrice transparente (1) et/ou à l'interface contre-électrode (4)/couche électroconductrice transparente (5) une couche additionnelle transparente, qui présente une conductivité électronique Ce faible mais non nulle et une conductivité ionique Ci aussi faible que possible avec un rapport Ci/Ce très grand.

## Patentansprüche

1. Elektrochrome Vorrichtung, welche eine elektrochrome Hauptzelle umfaßt, die durch den Aufbau eines Systems, das aus einer elektrisch leitfähigen Schicht (1), einer Schicht (2) aus elektrochromem Material, einem Elektrolyten (3), einer Gegenelektrode (4) und einer elektrisch leitfähigen Schicht (5) besteht, auf einem transparenten Substrat gebildet ist, wobei diese Zelle mit zwei mit den elektrisch leitfähigen Schichten verbundenen Stromanschlüssen W und CE und einer Spannungsquelle ausgestattet ist, die das Anlegen einer Potentialdifferenz an die Stromanschlüsse ermöglicht, um die Färbung bzw. Entfärbung der Zelle zu erreichen, **dadurch gekennzeichnet, daß** sie ein elektrisches Bezugselement umfaßt, das aus einer zweiten elektrochromen Zelle besteht, deren ohmsche Verluste im Verhältnis zu denen, die von den elektrisch leitfähigen Schichten (1, 5) und dem Elektrolytwiderstand des Elektrolyten (3) der elektrochromen Hauptzelle verursacht werden, klein sind, wobei dieses Element zur elektrochromen Hauptzelle parallel geschaltet und mit einem Widerstand Rᵢ in Reihe angeordnet ist und die an die Stromanschlüsse W und CE dieser Zelle angelegte Potentialdifferenz derart ist, daß die Spannung an den Stromanschlüssen W und R_{EF} des Bezugselements auf einem Wert gehalten wird, der kleiner als eine Färbungs-bzw. Entfärbungs-Bezugsspannung U_{REF} ist.

2. Elektrochrome Vorrichtung nach Anspruch 1, **dadurch gekennzeichnet, daß** die elektrochrome Bezugszelle einen Elektrolyten enthält, dessen Ionenübergangswiderstand Rₜ an seinen Grenzflächen gleich dem des Elektrolyten (3) der elektrochromen Hauptzelle ist und dessen Elektrolytwiderstand im Verhältnis zum Elektrolytwiderstand des Elektrolyten (3) der elektrochromen Hauptzelle, gemessen an einer Zelle mit denselben Abmessungen wie die der elektrochromen Bezugszelle, klein ist.

3. Elektrochrome Vorrichtung nach Anspruch 1 oder 2, **dadurch gekennzeichnet, daß** die elektrochrome Bezugszelle derselben Temperatur wie die übrige Zelle ausgesetzt ist.

4. Elektrochrome Vorrichtung nach einem der Ansprüche 1 bis 3, **dadurch gekennzeichnet, daß** die elektrochrome Bezugszelle auf einer höheren Temperatur, beispielsweise auf einer Temperatur von etwa 60 °C, gehalten wird.

5. Elektrochrome Vorrichtung, welche eine elektrochrome Zelle umfaßt, die durch den Aufbau eines Systems, das aus einer transparenten elektrisch leitfähigen Schicht (1), einer Schicht (2) aus elektrochromem Material, einem Elektrolyten (3), einer Gegenelektrode (4) und einer elektrisch leitfähigen Schicht (5) besteht, auf einem transparenten Substrat gebildet ist, wobei diese Zelle mit zwei mit den elektrisch leitfähigen Schichten verbundenen Stromanschlüssen W und CE und einer Spannungsquelle ausgestattet ist, die das Anlegen einer Potentialdifferenz an die Stromanschlüsse ermöglicht, um die Färbung bzw. Entfärbung der Zelle zu erreichen, **dadurch gekennzeichnet, daß** sie ein elektrisches Bezugselement umfaßt, das aus einer elektrischen Schaltung besteht, deren komplexe Impedanz Z gleich der komplexen Impedanz einer Oberflächeneinheit der elektrochromen Zelle ist, wobei dieses Element zur elektrochromen Zelle parallel geschaltet und mit einem Widerstand Rᵢ in Reihe angeordnet ist, der gleich dem Elektrolytwiderstand einer Oberflächeneinheit der elektrochromen Zelle ist und die an die Stromanschlüsse W und CE dieser Zelle angelegte Potentialdifferenz derart ist, daß die Spannung an den Stromanschlüssen W und R_{EF} des Bezugselements auf einem Wert gehalten wird, der kleiner als eine Färbungs-bzw. Entfärbungs-Bezugsspannung U_{REF} ist.

6. Elektrochrome Vorrichtung nach Anspruch 5, **dadurch gekennzeichnet, daß** die komplexe Impedanz Z durch einen Widerstand R und eine Kapazität C ersetzt wird, wobei C gleich dem Verhältnis der Menge der in das elektrochrome Material eingelagerten Ladungen zum Gleichgewichtspotential der Zelle ist.

7. Elektrochrome Vorrichtung nach Anspruch 6, **dadurch gekennzeichnet, daß** die elektrisch leitfähigen Schichten einen solchen Flächenwiderstand Rₑ besitzen, daß für eine Zelle mit einer Oberflächeneinheit das Verhältnis von R/Rₑ größer als 1 000 und vorzugsweise größer als 10 000 ist.

8. Elektrochrome Vorrichtung nach Anspruch 7, **dadurch gekennzeichnet, daß** der Widerstand Rᵢ und der Widerstand Rₑ derart gewählt werden, daß für eine Zelle mit einer Oberflächeneinheit das Verhältnis von Rᵢ/Rₑ größer als 500 ist.

9. Elektrochrome Vorrichtung nach Anspruch 8, **dadurch gekennzeichnet, daß** das Verhältnis von Rᵢ/Rₑ kleiner als 100 000 ist.

10. Elektrochrome Vorrichtung nach einem der Ansprüche 7 bis 9, **dadurch gekennzeichnet, daß** der Elektrolyt (3) zwischen zwei Sperrschichten angeordnet wird, deren spezifischer Widerstand so hoch ist, daß der Elektrolytwiderstand der Einheit, die aus dem Elektrolyten (3) und den beiden Sperrschichten besteht, mehr als 10 000 Ohm und vorzugsweise weniger als 100 000 Ohm beträgt.

11. Elektrochrome Vorrichtung nach Anspruch 10, **dadurch gekennzeichnet, daß** der Elektrolyt (3) eine Ionenleitfähigkeit von über 10⁻³ Ohm⁻¹ besitzt.

12. Elektrochrome Vorrichtung nach einem der vorhergehenden Ansprüche, **dadurch gekennzeichnet, daß** der Widerstand Rᵢ ein Thermistor ist, dessen Widerstand sich wie der Elektrolytwiderstand des Elektrolyten in Abhängigkeit von der Temperatur verändert.

13. Elektrochrome Vorrichtung nach einem der vorhergehenden Ansprüche, **dadurch gekennzeichnet, daß** parallel zum Bezugselement eine Kapazität C' geschaltet ist.

14. Elektrochrome Vorrichtung nach einem der vorhergehenden Ansprüche, **dadurch gekennzeichnet, daß** die Bezugsspannung U_{REF} gleich der Grenzspannung von Färbung/Entfärbung gewählt wird.

15. Elektrochrome Vorrichtung nach einem der vorhergehenden Ansprüche, **dadurch gekennzeichnet, daß** die Bezugsspannung U_{REF}, außer am Ende von Färbung oder Entfärbung, wo die Bezugsspannung erhöht wird, gleich der Grenzspannung von Färbung/Entfärbung gewählt wird.

16. Elektrochrome Vorrichtung nach einem der Ansprüche 5 bis 15, **dadurch gekennzeichnet, daß** sie an der Grenzfläche elektrochromes Material (2)/transparente elektrisch leitfähige Schicht (1) und/oder an der Grenzfläche Gegenelektrode (4)/transparente elektrisch leitfähige Schicht (5) eine zusätzliche transparente Schicht enthält, welche eine Elektronenleitfähigkeit Cₑ, die niedrig, aber nicht gleich Null ist, und eine Ionenleitfähigkeit Cᵢ, die bei einem sehr hohen Verhältnis von Cᵢ/Cₑ ebenfalls so niedrig wie möglich ist, aufweist.

## Claims

1. Electrochromic device incorporating a main electrochromic cell formed by the stacking on a transparent substrate of a system constituted by an electroconductive layer (1), an electrochromic material layer (2), an electrolyte (3), a counterelectrode (4) and an electroconductive layer (5), said cell being provided with two terminals W and CE connected to the electroconductive layers and a voltage generator permitting the application of a potential difference between said terminals in order to respectively bring about the colouring or decolourizing of the cell, characterized in that it comprises a reference electrical component constituted by a second electrochromic cell or which the ohmic drops are small compared with those due to the electroconductive layers (1, 5) and to the ionic resistance of the electrolyte (3) of the main electrochromic cell, said component being connected in parallel to the main electrochromic cell and connected in series with a resistor Rᵢ, said potential difference applied to the terminals W and CE of said cell being such that the voltage at the terminals W and R_{EF} of the reference component is kept at a value below the respective colouring or decolourizing reference voltage U_{REF}.

2. Electrochromic device according to claim 1, characterized in that said reference electrochromic cell has an electrolyte, whose ion transfer resistance Rₜ at its interfaces is identical to that of the electrolyte (3) of the main electrochromic cell and whose ionic resistance is small compared with the ionic resistance of the electrolyte (3) of the main electrochromic cell, measured for a cell having the same dimensions as those of the reference electrochromic cell.

3. Electrochromic device according to one of the claims 1 and 2, characterized in that the reference electrochromic cell is exposed to the same temperature as the remainder of the cell.

4. Electrochromic device according to one of the claims 1 to 3, characterized in that the reference electrochromic cell is maintained at a high temperature, e.g. a temperature of approximately 60°C.

5. Electrochromic device incorporating an electrochromic cell formed by the stacking on a transparent substrate of a system constituted by a transparent electroconductive layer (1), an electrochromic material layer (2), an electrolyte (3), a counterelectrode (4) and an electroconductive layer (5), said cell being provided with two terminals W and CE connected to the electroconductive layers and a voltage generator permitting the application of a potential difference between said terminals to bring about respectively the colouring or decolourizing of the cell, characterized in that it comprises a reference electrical component constituted by an electrical arrangement, whose complex impledance Z is equivalent to the complex impedance of a unit of area of the electrochromic cell, said component being connected in parallel to the electrochromic cell and connected in series with a resistance Rᵢ equivalent to the ionic resistance of a unit of area of said electrochromic cell, said potential difference applied between the terminals W and CE of said cell being such that the voltage at the terminals W and R_{EF} of the reference component is kept at a value below the respective colouring or decolourizing reference voltage U_{REF}.

6. Electrochromic device according to claim 5, characterized in that for the complex impedance Z is substituted a resistance R and a capacitance C, C being equal to the ratio of the charge quantity inserted in the electrochromic material to the equilibrium potential of the cell.

7. Electrochromic device according to claim 6, characterized in that the electroconductive layers have a square resistance Rₑ such that the ratio R/R e exceeds 1000 and preferably exceeds 10,000 for a cell of one unit of area.

8. Electrochromic device according to claim 7, characterized in that the resistance Rᵢ and resistance Rₑ are chosen in such a way that the ratio Rᵢ/Rₑ exceeds 500 for a cell of one unit of area.

9. Electrochromic device according to claim 8, characterized in that the ratio Rᵢ/Rₑ is below 100,000.

10. Electrochromic device according to one of the claims 7 to 9, characterized in that the electrolyte (3) is placed between two high resistivity barrier layers such that the ionic resistance of the assembly constituted by the electrolyte (3) and the two barrier layers exceeds 10,000 ohms and is preferably below 100,000 ohms.

11. Electrochromic cell according to claim 10, characterized in that the electrolyte (3) has an ionic conductivity exceeding 10⁻³ ohms⁻¹.

12. Electrochromic device according to one of the preceding claims, characterized in that the resistor Rᵢ is a thermistor, whose resistance varies as a function of the temperature like the ionic resistance of the electrolyte.

13. Electrochromic device according to one of the preceding claims, characterized in that a capacitor C' is connected in parallel with the reference component.

14. Electrochromic device according to one of the preceding claims, characterized in that the reference voltage U_{REF} is chosen identical to the limit colouring/decolourizing voltage.

15. Electrochromic device according to one of the preceding claims, characterized in that the reference voltage U_{REF} is chosen equal to the limit colouring/decolourizing voltage, except at the end of colouring or decolourizing, when the reference voltage is increased.

16. Electrochromic device according to one of the claims 5 to 15, characterized in that it comprises at the interface of the electrochromic material (2)/transparent electroconductive layer (1) and/or at the interface of the counterelectrode (4)/transparent electroconductive layer (5), an additional transparent layer, which has an electronic conductivity Ce, which is low but not zero and an ionic conductivity Ci which is as low as possible with a very high Ci/Ce ratio.
